# EUROPÄISCHE PATENTANMELDUNG

(11) **EP 2 626 267 A2**
(43) Veröffentlichungstag der Anmeldung: **14.08.2013**
(21) Anmeldenummer: 12197419.0
(22) Anmeldetag: 17.12.2012
(51) Int. Cl.: B60W 30/02, B60W 30/09

(54) **Verfahren und Vorrichtung zum Betreiben eines Fahrzeugs**

(30) Priorität: 10.02.2012 DE 102012201979
(71) Anmelder: ROBERT BOSCH GMBH, 70442 Stuttgart (DE)
(72) Erfinder: Kieren, Martin, 71672 Marbach A. N. (DE); Haeussler, Thomas, 74653 Kuenzelsau-Vogelsberg (DE)

(57) **Zusammenfassung**

Die Erfindung betrifft ein Verfahren zum Betreiben eines Fahrzeugs, wobei im Fall einer Detektion (101) eines Fahrzeugausweichmanövers ein Fahrerassistenzsystem (303) für eine laterale Fahrzeugdynamiksteuerung aktiviert (103) wird.

Die Erfindung betrifft ferner eine entsprechende Vorrichtung, sowie ein entsprechendes System und ein Computerprogramm.

## Beschreibung

Die Erfindung betrifft ein Verfahren und eine Vorrichtung zum Betreiben eines Fahrzeugs. Die Erfindung betrifft ferner ein System zum Betreiben eines Fahrzeugs sowie ein Computerprogramm.

### Stand der Technik

Es ist bekannt, Fahrzeuge mit Fahrerassistenzsystemen vorzusehen, welche Assistenzfunktionen bereitstellen können, die aufgrund von einer Umfeldsensorik wie beispielsweise Radar oder Videokamera eine Gefahrensituation von Auffahrunfällen einschätzen und aktiv Eingriffe über eine Bremsaktuatorik vornehmen, um dadurch Unfälle zu vermeiden oder zumindest eine Unfallschwere zu mindern. Solche Assistenzfunktionen sind allerdings nur aktiv, das heißt also, dass die entsprechenden Fahrerassistenzsysteme nur aktiv sind, wenn der Fahrer kein Ausweichmanöver zur Vermeidung des Unfalls initiiert.

Aus der Patentschrift EP 1 735 187 B1 ist ein Anti-Kollisionssystem für ein Fahrzeug sowie ein entsprechendes Verfahren bekannt.

Aus der Offenlegungsschrift DE 102 31 584 A1 ist ein Verfahren und eine Vorrichtung zum selbsttätigen Auslösen einer Verzögerung eines Fahrzeugs bekannt. Hierbei wird eine Notbremsfunktion erst zu einem späteren Zeitpunkt aktiviert oder sogar komplett deaktiviert, wenn der Fahrer ein Notausweichmanöver vornimmt.

### Offenbarung der Erfindung

Die der Erfindung zugrunde liegende Aufgabe kann daher darin gesehen werden, ein verbessertes Verfahren und eine verbesserte Vorrichtung zum Betreiben eines Fahrzeugs bereitzustellen, wobei in einer Gefahrensituation ein Unfall vermieden oder zumindest eine Unfallschwere gemindert werden kann.

Die der Erfindung zugrunde liegende Aufgabe kann auch darin gesehen werden, ein entsprechendes System zum Betreiben eines Fahrzeugs bereitzustellen.

Die der Erfindung zugrunde liegende Aufgabe kann auch darin gesehen werden, ein entsprechendes Computerprogramm anzugeben.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Verfahren zum Betreiben eines Fahrzeugs bereitgestellt. Hierbei ist vorgesehen, dass im Fall einer Detektion eines Fahrzeugausweichmanövers ein Fahrerassistenzsystem für eine laterale Fahrzeugdynamiksteuerung aktiviert wird.

Gemäß einem weiteren Aspekt wird eine Vorrichtung zum Betreiben eines Fahrzeugs bereitgestellt. Die Vorrichtung umfasst eine Detektionseinrichtung zum Detektieren eines Fahrzeugausweichmanövers. Ferner umfasst die Vorrichtung eine Aktivierungseinrichtung zum Aktivieren eines Fahrerassistenzsystems für eine laterale Fahrzeugdynamiksteuerung in Abhängigkeit von dem detektierten Ausweichmanöver.

Nach noch einem Aspekt wird ein System zum Betreiben eines Fahrzeugs bereitgestellt, wobei das System die Vorrichtung zum Betreiben eines Fahrzeugs umfasst sowie ein Fahrerassistenzsystem für eine laterale Fahrzeugdynamiksteuerung.

Gemäß einem weiteren Aspekt wird ein Computerprogramm bereitgestellt, welches Programmcode zur Ausführung des Verfahrens zum Betreiben eines Fahrzeugs umfasst, wenn das Computerprogramm auf einem Computer ausgeführt wird.

Die Erfindung umfasst also insbesondere den Gedanken, ein Fahrzeugausweichmanöver zu detektieren, das heißt also insbesondere zu erkennen, woraufhin dann ein Fahrerassistenzsystem für eine laterale Fahrzeugdynamiksteuerung aktiviert wird. Das heißt also insbesondere, dass das Fahrerassistenzsystem erst dann aktiviert wird, wenn ein Fahrzeugausweichmanöver durchgeführt wird. Dadurch also, dass bei einem Fahrzeugausweichmanöver das Fahrerassistenzsystem für eine laterale Fahrzeugdynamiksteuerung aktiviert wird, kann dieses Fahrerassistenzsystem einen Fahrer während des Fahrzeugausweichmanövers in vorteilhafter Weise unterstützen, so dass ein Unfall vermieden oder zumindest eine Unfallschwere gemindert werden kann. So kann beispielsweise ein Fahrer aufgrund einer Panikreaktion das Lenkrad unnötigerweise zu weit einschlagen, so dass das Fahrzeug beispielsweise ins Schleudern geraten könnte. Das Fahrerassistenzsystem kann dann hier beispielsweise den zu starken Lenkeinschlag seitens des Fahrers insofern dahingehend ignorieren, dass nur ein sinnvoller der Situation angepasster Lenkradeinschlag berücksichtigt wird.

Ein Fahrerassistenzsystem im Sinne der vorliegenden Erfindung bezeichnet insbesondere ein System, welches autonom oder teilautonom in einen Antrieb, einer Steuerung, wie beispielsweise Gas oder Bremse, und/oder einer Signalisierungseinrichtung des Fahrzeugs kurz vor oder während einer kritischen Situation eingreift. Ein Fahrerassistenzsystem im Sinne der vorliegenden Erfindung ist insbesondere eingerichtet, mittels einer Mensch-Maschinen-Schnittstelle einen Fahrer kurz vor oder während der kritischen Situation zu warnen. Das Fahrerassistenzsystem ist insbesondere ausgebildet, ein oder mehrere Räder des Fahrzeugs, insbesondere jeweils unabhängig voneinander, zu bremsen respektive zu beschleunigen. Vorzugsweise ist das Fahrerassistenzsystem dafür ausgebildet, in ein Lenkungssystem des Fahrzeugs einzugreifen, so dass das Fahrerassistenzsystem beispielsweise das Fahrzeug teilautonom oder autonom lenken kann.

Das Fahrerassistenzsystem für eine laterale Fahrzeugdynamiksteuerung ist insbesondere ein Fahrerassistenzsystem, welches eine laterale Fahrzeugdynamik steuern kann. Lateral bedeutet hier insbesondere zur Seite hin gelegen. Das heißt also insbesondere, dass das Fahrerassistenzsystem für eine laterale Fahrzeugdynamiksteuerung autonom oder teilautonom in die einzelnen Fahrzeugsysteme wie beispielsweise Antrieb, Lenkung, Steuerung oder Signalisierungseinrichtungen eingreift, wenn das Fahrzeug sich zur Seite hin bewegt, also von seiner ursprünglichen Trajektorie abweicht. Eine solche laterale Fahrzeugdynamiksteuerung unterscheidet sich insbesondere von einem Notbremssystem bereitstellend eine Notbremsfunktion dahingehend, dass das Notbremssystem lediglich in longitudinaler Richtung, also in Richtung einer Längsachse, hier also in Richtung der ursprünglichen Fahrzeugtrajektorie, eingreift, um das Fahrzeug lediglich abzubremsen. Ein solches System unterstützt den Fahrer aber nicht, wenn der Fahrer ein Ausweichmanöver durchführt, also von seiner ursprünglichen Fahrtrajektorie abweicht, also zur Seite hin fährt.

Ein Fahrzeugausweichmanöver im Sinne der vorliegenden Erfindung bezeichnet insbesondere ein Manöver, mittels welchen das Fahrzeug um ein Hindernis herum manövriert, um eine Kollision zu vermeiden oder eine Unfallschwere zu vermindern. Es kann beispielsweise vorgesehen sein, dass ein solches Fahrzeugausweichmanöver von entsprechenden Fahrzeugassistenzsystemen autonom oder teilautonom eingeleitet und insbesondere durchgeführt wird. Es kann vorzugsweise vorgesehen sein, dass ein solches Fahrzeugausweichmanöver von einem Fahrer eingeleitet und insbesondere durchgeführt wird.

Damit nicht jedes Fahrzeugmanöver als ein Fahrzeugausweichmanöver erkannt beziehungsweise detektiert oder klassifiziert wird, können vorzugsweise ein oder mehrere Kriterien vorgesehen sein, welche vorliegen können beziehungsweise erfüllt sein können, damit ein Fahrzeugmanöver als ein Fahrzeugausweichmanöver detektiert beziehungsweise erkannt oder klassifiziert wird. Solche beispielhaften Kriterien, welche insbesondere jede für sich einzeln oder beispielsweise zusammen oder vorzugsweise nur einige zusammen vorliegen können, werden im Folgenden beschrieben.

Gemäß einer Ausführungsform kann vorgesehen sein, dass die Detektion des Fahrzeugausweichmanövers ein Erfassen eines Fahrerlenkwinkels umfasst, welcher größer als ein vorbestimmter Fahrerlenkwinkelschwellwert ist. Das heißt also insbesondere, dass ein Fahrzeugausweichmanöver erst dann als ein solches erkannt beziehungsweise detektiert wird, wenn ein Fahrerlenkwinkel erfasst wird, welcher größer als ein vorbestimmter Fahrerlenkwinkelschwellwert ist. Das heißt also insbesondere, dass das Fahrerassistenzsystem erst dann aktiviert wird, wenn der erfasste Fahrerlenkwinkel größer als der vorbestimmte Fahrerlenkwinkelschwellwert ist. Vorzugsweise kann ein solcher Fahrerlenkwinkelschwellwert 5° betragen. Hierbei bezeichnet 0° den Fahrerlenkwinkel, in dem das Fahrzeug geradeaus entlang seiner Längsachse, also der Achse entlang seiner größten Ausdehnung, fährt.

In einer anderen Ausführungsform kann vorgesehen sein, dass die Detektion des Fahrzeugausweichmanövers ein Erfassen einer Lenkwinkelgeschwindigkeit umfasst, welche größer als ein vorbestimmter Lenkwinkelgeschwindigkeitsschwellwert ist. Das heißt also insbesondere, dass das Fahrzeugausweichmanöver erst dann als solches erkannt beziehungsweise detektiert wird, wenn die erfasste Lenkwinkelgeschwindigkeit größer als ein vorbestimmter Lenkwinkelgeschwindigkeitsschwellwert ist. Das heißt also insbesondere, dass das Fahrerassistenzsystem erst dann aktiviert wird, wenn die erfasste Lenkwinkelgeschwindigkeit größer als der vorbestimmte Lenkwinkelgeschwindigkeitsschwellwert ist. In der Regel wird ein Fahrer bei einem Ausweichmanöver eine höhere Lenkwinkelgeschwindigkeit vorsehen als bei einem normalen Überholmanöver oder bei einer regulären Kurvenfahrt. Durch das Vorsehen eines vorbestimmten Lenkwinkelgeschwindigkeitsschwellwertes kann insofern in vorteilhafter Weise sichergestellt werden, dass nicht jedes normale Überholmanöver zu einer Aktivierung des Fahrerassistenzsystems führt. Somit wird in vorteilhafter Weise ein Missbrauch des Fahrerassistenzsystems seitens des Fahrers vermieden. Vorzugsweise kann der Lenkwinkelgeschwindigkeitsschwellwert 70° Grad/s sein.

Beispielsweise kann vorgesehen sein, dass die Lenkwinkelgeschwindigkeit Tiefpass-gefiltert wird. Das heißt also insbesondere, dass entsprechende Lenkwinkelgeschwindigkeitssignale, welche insbesondere mittels eines Lenkradsensors oder mehrerer Lenkradsensoren bereitgestellt werden können, mittels eines Tiefpasses gefiltert werden. Da üblicherweise Lenkwinkelgeschwindigkeitssignale hohe Frequenzen aufweisen, kann somit in vorteilhafter Weise ein entsprechender Frequenzbereich herausgefiltert werden, was ein klareres Signal zur Folge hat und insofern eine Robustheit und auch eine frühzeitige Aktivierung des Fahrerassistenzsystems in vorteilhafter Weise ermöglicht.

Nach einer anderen Ausführungsform kann vorgesehen sein, dass die Detektion des Fahrzeugausweichmanövers ein Erfassen einer angeforderten Antriebsleistung umfasst, die kleiner als ein vorbestimmter Antriebsleistungsschwellwert ist.

Das heißt also insbesondere, dass das Fahrerassistenzsystem erst dann aktiviert wird, wenn die erfasste angeforderte Antriebsleistung kleiner ist als der vorbestimmte Antriebsleistungsschwellwert ist. In der Regel ist es so, dass ein Fahrer, wenn er ein Fahrzeugausweichmanöver durchführen will, keine Antriebsleistung mehr fordert, so dass hier ein weiteres Kriterium vorliegen kann, das anzeigt, dass ein Fahrzeugausweichmanöver vorliegt bzw. durchgeführt wird, woraufhin dann das Fahrerassistenzsystem für eine laterale Fahrzeugdynamiksteuerung aktiviert wird. Eine Antriebsleistung kann beispielsweise mittels einer Betätigung eines Gaspedals bewirkt werden. Insofern kann beispielsweise eine Stellung eines Gaspedals erfasst werden. Insbesondere wenn ein solches Gaspedal nicht betätigt ist, kann davon ausgegangen werden, dass der Fahrer keine Antriebsleistung anfordert. Der vorbestimmte Antriebsleistungsschwellwert ist hier dann insbesondere Null. Dadurch wird weiterhin in vorteilhafter Weise ein Missbrauch des Fahrerassistenzsystems für eine laterale Fahrzeugdynamiksteuerung in normalen Überholmanövern vermieden.

Gemäß einer weiteren Ausführungsform kann vorgesehen sein, dass die Detektion des Fahrzeugausweichmanövers ein Erfassen eines vorbestimmten Betriebszustands einer Signalisierungseinrichtung des Fahrzeugs umfasst. Das heißt also insbesondere, dass das Fahrerassistenzsystem erst dann aktiviert wird, wenn der Betriebszustand der Signalisierungseinrichtung einem vorbestimmten Betriebszustand entspricht. Das heißt also insbesondere, dass ein Fahrzeugausweichmanöver als solches detektiert beziehungsweise erkannt wird, wenn ein vorbestimmter Betriebszustand einer Signalisierungseinrichtung des Fahrzeugs erfasst wird. Das heißt also insbesondere, dass die Signalisierungseinrichtung einen vorbestimmten Betriebszustand aufweisen muss, bevor ein Fahrzeugausweichmanöver als solches detektiert beziehungsweise erkannt wird. Vorzugsweise können mehrere Signalisierungseinrichtungen vorgesehen sein, welche gleich oder unterschiedlich gebildet sein können.

Nach einer Ausführungsform kann die Detektion des Fahrzeugausweichmanövers ein Erfassen eines Aus-Betriebszustandes eines Fahrtrichtungsanzeigers des Fahrzeugs umfassen. Das heißt also insbesondere, dass, wenn erfasst wird, dass der Fahrtrichtungsanzeiger sich in einem Aus-Betriebszustand, also deaktiviert ist, befindet, ein Fahrzeugausweichmanöver als solches detektiert beziehungsweise erkannt wird. Ein Fahrtrichtungsanzeiger signalisiert insbesondere optisch eine voraussichtliche Fahrtrichtung des Fahrzeugs. Vorzugsweise kann der Fahrtrichtungsanzeiger ein oder mehrere Leuchtmittel umfassen, welche eine Fahrtrichtungsänderung insbesondere mittels Blinken anzeigen können. Umgangssprachlich hat sich der Begriff "Blinker" für den Begriff des Fahrtrichtungsanzeigers eingebürgert. In der Regel wird ein Fahrer in einer kritischen Fahrsituation den Fahrtrichtungsanzeiger nicht mehr betätigen, also diesen in einen An-Betriebszustand versetzen, da er hierfür üblicherweise keine Zeit mehr hat. Gemäß der vorbeschriebenen Ausführungsform wird also das Fahrerassistenzsystem für eine laterale Fahrzeugdynamiksteuerung dann nicht aktiviert, wenn sich der Fahrtrichtungsanzeiger in einem An-Betriebszustand befindet. Es wird also aktiviert, wenn sich der Fahrtrichtungsanzeiger in einem Aus-Betriebszustand befindet.

Gemäß einer weiteren Ausführungsform kann vorgesehen sein, dass die Detektion des Fahrzeugausweichmanövers ein Erfassen eines An-Betriebszustandes einer Bremsleuchte des Fahrzeugs umfasst. Das heißt also insbesondere, dass eine Detektion des Fahrzeugausweichmanövers erst als solches erkannt beziehungsweise detektiert wird, wenn sich eine Bremsleuchte in einem An-Betriebszustand befindet. Das heißt also insbesondere, dass das Fahrerassistenzsystem für eine laterale Fahrzeugdynamiksteuerung nur dann aktiviert wird, wenn sich die Bremsleuchte in einem An-Betriebszustand befindet. Ein An-Betriebszustand der Bremsleuchte bezeichnet insbesondere einen Betriebszustand, in welchem die Bremsleuchte aktiviert ist und insofern optisch anzeigen kann, dass der Fahrer beispielsweise ein Bremspedal betätigt hat und/oder sich insbesondere eine Fahrzeuggeschwindigkeit verringert beziehungsweise verzögert.

In einer nicht gezeigten Ausführungsform kann vorgesehen sein, dass die Detektionseinrichtung einen oder mehrere Sensoren umfasst, welche beispielsweise einen Fahrerlenkwinkel und/oder eine Lenkwinkelgeschwindigkeit und/oder eine angeforderte Antriebsleistung, insbesondere eine Gaspedalstellung, und/oder einen Betriebszustand einer Signalisierungseinrichtung des Fahrzeugs sensorisch erfassen können.

Die Erfindung wird im Folgenden anhand von bevorzugten Ausführungsbeispielen näher erläutert. Hierbei zeigen
- Fig. 1: ein Ablaufdiagramm eines Verfahrens zum Betreiben eines Fahrzeugs,
- Fig. 2: eine Vorrichtung zum Betreiben eines Fahrzeugs,
- Fig. 3: ein System zum Betreiben eines Fahrzeugs,
- Fig. 4: ein Ablaufdiagramm eines weiteren Verfahrens zum Betreiben eines Fahrzeugs und
- Fig. 5: eine grafische Darstellung von verschiedenen Kriterien, um ein Fahrzeugausweichmanöver als solches zu detektieren beziehungsweise zu erkennen.

Im Folgenden werden für gleiche Merkmale gleiche Bezugszeichen verwendet.

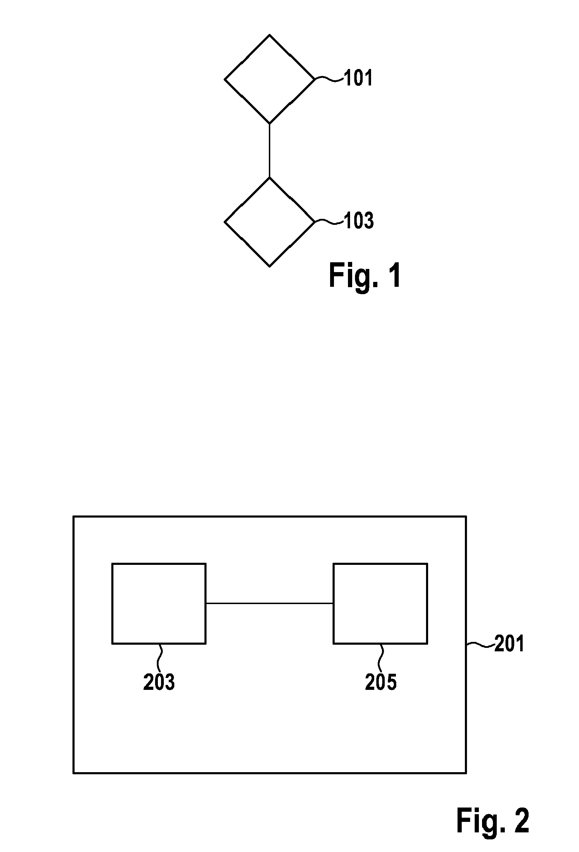

Fig. 1 zeigt ein Ablaufdiagramm eines Verfahrens zum Betreiben eines Fahrzeugs. Wenn in einem Schritt 101 ein Fahrzeugausweichmanöver detektiert wird, wird in einem Schritt 103 ein Fahrerassistenzsystem für eine laterale Fahrzeugdynamiksteuerung aktiviert. Somit kann in vorteilhafter Weise dem Fahrer eine Unterstützung für das Fahrzeugausweichmanöver gegeben werden. Es kann hier insbesondere vorgesehen sein, dass das Fahrerassistenzsystem für eine laterale Fahrzeugdynamiksteuerung während des Fahrzeugausweichmanövers ein oder mehrere Reifen des Fahrzeugs, insbesondere jeweils unabhängig voneinander, beschleunigt respektive abbremst beziehungsweise verzögert. Somit kann beispielsweise in vorteilhafter Weise eine Fahrzeugspur besser gehalten werden, insofern ein Ausbrechen beziehungsweise ein Schleudern des Fahrzeugs in vorteilhafter Weise vermieden werden kann. Beispielsweise kann das Fahrerassistenzsystem in eine Lenkung des Fahrzeugs eingreifen.

Damit nicht jedes Fahrzeugmanöver als ein Fahrzeugausweichmanöver erkannt beziehungsweise detektiert oder klassifiziert wird, können ein oder mehrere Kriterien vorgesehen sein, welche vorliegen müssen beziehungsweise erfüllt sein, damit ein Fahrzeugmanöver als ein Fahrzeugausweichmanöver detektiert beziehungsweise erkannt wird.

Beispielsweise kann vorgesehen sein, dass ein Fahrerlenkwinkel größer als ein vorbestimmter Fahrerlenkwinkelschwellwert ist, um ein Fahrzeugmanöver als ein Fahrzeugausweichmanöver zu detektieren beziehungsweise zu erkennen.

Vorzugsweise kann vorgesehen sein, dass eine Lenkwinkelgeschwindigkeit, insbesondere eine Tiefpass-gefilterte Lenkwinkelgeschwindigkeit, größer als ein vorbestimmter Lenkwinkelgeschwindigkeitsschwellwert ist, um ein Fahrzeugmanöver als ein Fahrzeugausweichmanöver zu detektieren beziehungsweise zu erkennen oder zu klassifizieren.

Vorzugsweise kann vorgesehen sein, dass als ein Kriterium für eine Detektion eines Fahrzeugausweichmanövers eine erfasste angeforderte Antriebsleistung kleiner als ein vorbestimmter Antriebsleistungsschwellwert ist. Vorzugsweise kann hier eine Stellung eines Gaspedals erfasst werden, wobei beispielsweise vorgesehen sein kann, dass in einer unbetätigten Gaspedalstellung das Kriterium eines Fahrzeugausweichmanövers erfüllt ist.

Beispielweise kann auch vorgesehen sein, dass ein Betriebszustand einer Signalisierungseinrichtung des Fahrzeugs erfasst wird, wobei, wenn der erfasste Betriebszustand einem vorbestimmten Betriebszustand entspricht, ein Fahrzeugmanöver als ein Fahrzeugausweichmanöver klassifiziert beziehungsweise detektiert wird, so dass daraufhin das Fahrerassistenzsystem für eine laterale Fahrzeugdynamiksteuerung aktiviert wird, so dass dieses dann in vorteilhafter Weise eine laterale Fahrzeugdynamik steuern kann.

Fig. 2 zeigt eine Vorrichtung 201 zum Betreiben eines Fahrzeugs (nicht gezeigt). Die Vorrichtung 201 umfasst eine Detektionseinrichtung 203, welche ausgebildet ist, ein Fahrzeugausweichmanöver des Fahrzeugs zu detektieren. Das heißt also insbesondere, dass die Detektionseinrichtung 203 ausgebildet ist, ein Fahrzeugmanöver als ein Fahrzeugausweichmanöver zu klassifizieren beziehungsweise zu erkennen, wenn ein oder mehrere Kriterien erfüllt sind. Bei solchen Kriterien kann es sich insbesondere um die vorgenannten Kriterien handeln.

Ferner umfasst die Vorrichtung 201 eine Aktivierungseinrichtung 205, welche ausgebildet ist, ein hier nicht gezeigtes Fahrerassistenzsystem für eine laterale Fahrzeugdynamiksteuerung zu aktivieren, wobei diese Aktivierung nur dann durchgeführt wird, wenn ein Fahrzeugmanöver als ein Fahrzeugausweichmanöver erkannt wird. Das heißt also insbesondere, dass das Fahrerassistenzsystem für eine laterale Fahrzeugdynamiksteuerung in Abhängigkeit von dem detektierten Fahrzeugausweichmanöver aktiviert wird.

In einer nicht gezeigten Ausführungsform kann vorgesehen sein, dass die Detektionseinrichtung 203 einen oder mehrere Sensoren umfasst, welche beispielsweise einen Fahrerlenkwinkel und/oder eine Lenkwinkelgeschwindigkeit und/oder eine angeforderte Antriebsleistung, insbesondere eine Gaspedalstellung, und/oder einen Betriebszustand einer Signalisierungseinrichtung des Fahrzeugs sensorisch erfassen können.

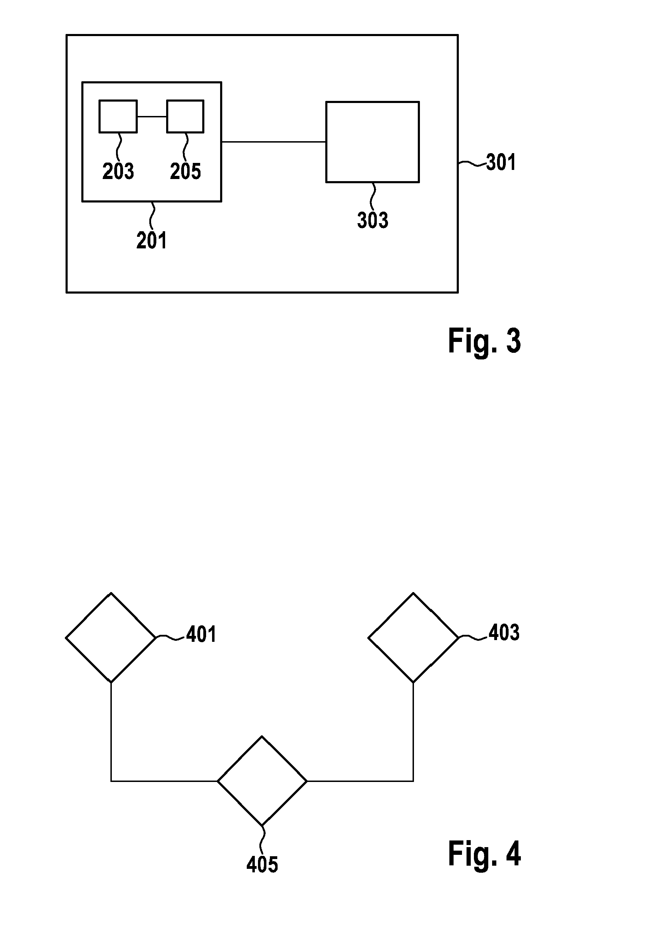

Fig. 3 zeigt ein System 301 zum Betreiben eines Fahrzeugs. Das System 301 umfasst die Vorrichtung 201 gemäß Fig. 2 sowie ein Fahrerassistenzsystem 303 für eine laterale Fahrzeugdynamiksteuerung. Das heißt also insbesondere, dass das Fahrerassistenzsystem 303 ausgebildet ist, eine laterale Fahrzeugdynamik zu steuern. Dadurch ist in vorteilhafter Weise das Fahrerassistenzsystem 303 in der Lage, einen Fahrer bei seinem Ausweichmanöver zu unterstützen, so dass hierbei ein Unfall vermieden oder zumindest eine Unfallschwere gemindert werden kann.

Fig. 4 zeigt ein Ablaufdiagramm eines weiteren Verfahrens zum Betreiben eines Fahrzeugs.

Gemäß einem Schritt 401 wird ein Fahrerlenkwinkel dahingehend überwacht, ob dieser größer oder kleiner als ein vorbestimmter Fahrerlenkwinkelschwellwert ist. Gemäß einem Schritt 403, welcher insbesondere zeitgleich mit dem Schritt 401 ausgeführt werden kann, wird überwacht, ob eine Lenkwinkelgeschwindigkeit, insbesondere eine Tiefpass-gefilterte Lenkwinkelgeschwindigkeit, einen vorbestimmten Lenkwinkelgeschwindigkeitsschwellwert überschreitet. Ein solcher Schwellwert kann beispielsweise 70°/s betragen.

Wenn der Fahrerlenkwinkel größer als der vorbestimmte Fahrerlenkwinkelschwellwert ist und wenn die Lenkwinkelgeschwindigkeit größer als der vorbestimmte Lenkwinkelgeschwindigkeitsschwellwert ist, wird in einem Schritt 405 das Fahrerassistenzsystem für eine laterale Fahrzeugdynamiksteuerung aktiviert, insofern aufgrund der beiden erfüllten Kriterien gemäß den Schritten 401 und 403 ein entsprechendes Fahrzeugmanöver als ein Fahrzeugausweichmanöver detektiert beziehungsweise erkannt wurde.

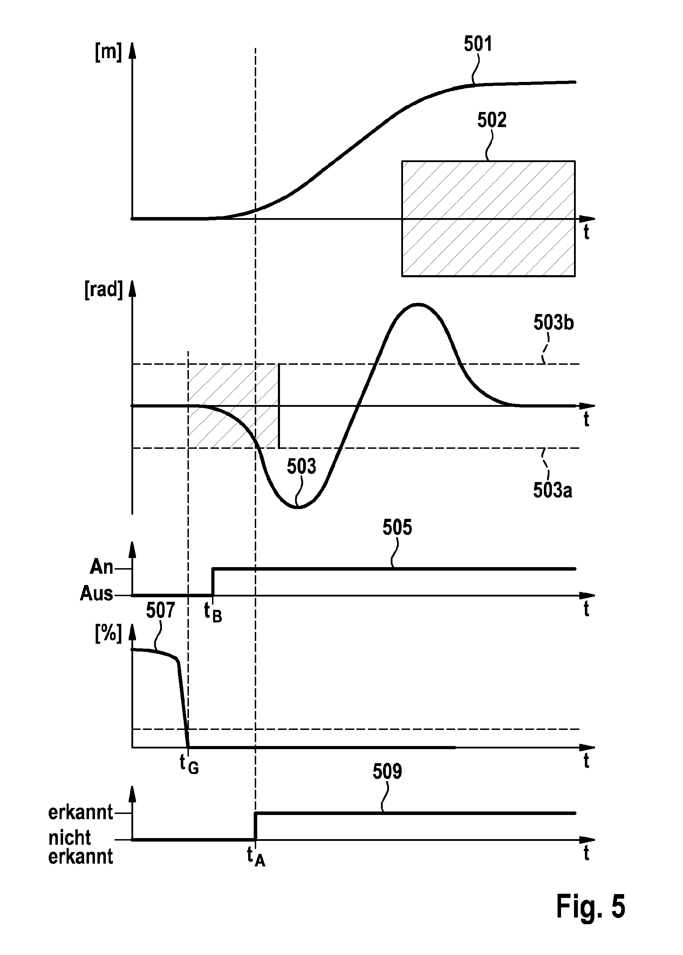

Fig. 5 zeigt verschiedene grafische Darstellungen für jeweils ein mögliches Kriterium, um ein Fahrzeugmanöver als ein Fahrzeugausweichmanöver zu detektieren beziehungsweise zu erkennen. Die einzelnen Graphen sind in Fig. 5 mit den Bezugszeichen 501, 503, 505, 507 und 509 gekennzeichnet. Die jeweilige Abszisse stellt den zeitlichen Verlauf t in willkürlichen Einheiten dar.

Gemäß dem Graphen 501 ist eine Ausweichtrajektorie des Fahrzeugs gegenüber einem hier symbolisch dargestellten Hindernis mit dem Bezugszeichen 502 dargestellt. Auf der y-Achse ist insofern ein Querversatz des Fahrzeugs in willkürlichen Einheiten, beispielsweise Metern, gegenüber dem Hindernis 502 dargestellt.

Gemäß dem Graphen 503 ist ein zeitlicher Verlauf des Lenkwinkels in rad dargestellt. Eingezeichnet sind ferner zwei Schwellwerte 503a und 503b, hier also Fahrerlenkwinkelschwellwerte.

Gemäß dem Graphen 505 ist ein Betriebszustand einer Bremsleuchte dargestellt. Zum Zeitpunkt t_{B} betätigt der Fahrer das Bremspedal, so dass die Bremsleuchte in einen An-Betriebszustand geht, das heißt die Bremsleuchte leuchtet.

Gemäß dem Graphen 507 ist ein zeitlicher Verlauf einer angeforderten Antriebsleistung dargestellt. Diese korreliert in der Regel mit einer Gaspedalstellung. Zu einem Zeitpunkt t_{G} beträgt die angeforderte Antriebsleistung 0% der maximalen Antriebsleistung. Das heißt also insbesondere, dass das Gaspedal nicht betätigt ist. Es befindet sich insofern in einer unbetätigten Stellung.

Der Graph 509 zeigt gemäß seiner Zeitachse, zu welchem Zeitpunkt im Vergleich beziehungsweise relativ zu den weiteren zeitlichen Verläufen gemäß den Graphen 501, 503, 505 und 507 das Fahrzeugmanöver als ein Fahrzeugausweichmanöver detektiert wurde. Der hier relevante Zeitpunkt ist mit t_{A} bezeichnet, wobei "A" für "Ausweichmanöver" steht.

Für t < t_{A} ist das Fahrzeugmanöver noch nicht als ein Fahrzeugausweichmanöver detektiert beziehungsweise klassifiziert, obwohl bereits zum Zeitpunkt t_{G}, wobei t_{G} < t_{A}, das Gaspedal nicht mehr betätigt wird. Auch ist zum Zeitpunkt t_{B}, wobei t_{B} < t_{A}, die Bremsleuchte in einem An-Betriebszustand, ohne das dies ausreicht, dass ein Fahrzeugmanöver als ein Fahrzeugausweichmanöver klassifiziert ist. Vielmehr muss insbesondere der Fahrerlenkwinkel den Fahrerlenkwinkelschwellwert 503a in negativer Richtung überschreiten, damit das Fahrzeugmanöver als ein Fahrzeugausweichmanöver klassifiziert wird.

Durch die sichere und frühzeitige (insbesondere fahrerbasierte, da Lenkradeingriffe des Fahrers erfasst und ausgewertet werden) Aktivierung wird also in vorteilhafter Weise eine robuste Aktivierung von neuen Assistenzfunktionen, die in Notausweichmanövern den Fahrer unterstützen können, gewährleistet.

## Patentansprüche

1. Verfahren zum Betreiben eines Fahrzeugs, wobei im Fall einer Detektion (101) eines Fahrzeugausweichmanövers ein Fahrerassistenzsystem (303) für eine laterale Fahrzeugdynamiksteuerung aktiviert (103) wird.

2. Verfahren nach Anspruch 1, wobei die Detektion des Fahrzeugausweichmanövers ein Erfassen eines Fahrerlenkwinkels (401) umfasst, welcher größer als ein vorbestimmter Fahrerlenkwinkelschwellwert ist.

3. Verfahren nach Anspruch 1 oder 2, wobei die Detektion des Fahrzeugausweichmanövers ein Erfassen einer Tiefpass-gefilterten Lenkwinkelgeschwindigkeit (403) umfasst, welche größer als ein vorbestimmter Lenkwinkelgeschwindigkeitsschwellwert ist.

4. Verfahren nach einem der vorherigen Ansprüche, wobei die Detektion des Fahrzeugausweichmanövers ein Erfassen einer angeforderten Antriebsleistung umfasst, die kleiner als ein vorbestimmter Antriebsleistungsschwellwert ist.

5. Verfahren nach einem der vorherigen Ansprüche, wobei die Detektion des Fahrzeugausweichmanövers ein Erfassen eines vorbestimmten Betriebszustands einer Signalisierungseinrichtung des Fahrzeugs umfasst.

6. Verfahren nach Anspruch 5, wobei die Detektion des Fahrzeugausweichmanövers ein Erfassen eines Aus-Betriebszustandes eines Fahrtrichtungsanzeigers des Fahrzeugs umfasst.

7. Verfahren nach Anspruch 5 oder 6, wobei die Detektion des Fahrzeugausweichmanövers ein Erfassen eines An-Betriebszustandes einer Bremsleuchte des Fahrzeugs umfasst.

8. Vorrichtung (201) zum Betreiben eines Fahrzeugs, umfassend eine Detektionseinrichtung (203) zum Detektieren eines Fahrzeugausweichmanövers des Fahrzeugs und eine Aktivierungseinrichtung (205) zum Aktivieren eines Fahrerassistenzsystems (303) für eine laterale Fahrzeugdynamiksteuerung in Abhängigkeit von dem detektierten Fahrzeugausweichmanöver.

9. System (301) zum Betreiben eines Fahrzeugs, umfassend die Vorrichtung (201) nach Anspruch 8 und ein Fahrerassistenzsystem (303) für eine laterale Fahrzeugdynamiksteuerung.

10. Computerprogramm, umfassend Programmcode zur Ausführung des Verfahrens nach einem der Ansprüche 1 bis 7, wenn das Computerprogramm auf einem Computer ausgeführt wird.
